# EUROPÄISCHE PATENTSCHRIFT

(11) **EP 1 642 229 B1**
(45) Veröffentlichungstag und Bekanntmachung des Hinweises auf die Patenterteilung: **21.05.2008**
(21) Anmeldenummer: 04736204.1
(22) Anmeldetag: 07.06.2004
(51) Int. Cl.: G06Q 10/00

(54) **VORRICHTUNG UND VERFAHREN ZUM BENUTZERSEITIGEN BEARBEITEN VON ELEKTRONISCHEN NACHRICHTEN MIT DATEI-ANLAGEN**
DEVICE AND METHOD FOR USER-BASED PROCESSING OF ELECTRONIC MESSAGES COMPRISING FILE ATTACHMENTS
DISPOSITIF ET PROCEDE POUR LE TRAITEMENT COTE UTILISATEUR DE MESSAGES ELECTRONIQUES CONTENANT DES ANNEXES SOUS FORME DE FICHIERS

(30) Priorität: 04.07.2003 DE 10330282
(43) Veröffentlichungstag der Anmeldung: 05.04.2006
(73) Patentinhaber: Siemens Enterprise Communications GmbH & Co. KG, 81379 München (DE)
(72) Erfinder: LEDERER, Thomas, 81379 München (DE); TOTZKE, Jürgen, 85586 Poing (DE)
(86) Internationale Anmeldenummer: PCT/EP2004/051042
(87) Internationale Veröffentlichungsnummer: WO 2005/004012

(56) Entgegenhaltungen:
- DE-A- 10 346 897
- US-A1- 2003 115 273
- US-A1- 2004 158 607
- ATTACHMENT EXECUTIVE VERSION 3.0, [Online] Juli 2001 (2001-07), Seiten 1-39, XP002296525 Gefunden im Internet: URL:http://web.archive.org/web/20030301033 209/madsolutions.com/documentation.htm> [gefunden am 2004-09-15]

## Beschreibung

Die vorliegende Erfindung bezieht sich auf eine Vorrichtung und ein Verfahren zum benutzerseitigen Bearbeiten von elektronischen Nachrichten mit Datei-Anlagen und insbesondere auf eine Vorrichtung und ein Verfahren zum Ersetzen von Datei-Anlagen in einer benutzerseitigen E-Mail.

Elektronische Nachrichten bzw. E-Mails haben sich sowohl im geschäftlichen als auch privaten Bereich als Kommunikationsform in modernen Telekommunikationsnetzwerken zunehmend durchgesetzt.

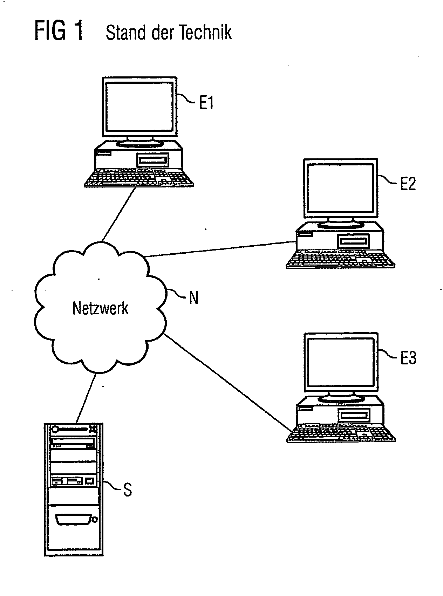

Figur 1 zeigt eine vereinfachte Blockdarstellung eines derartigen herkömmlichen Telekommunikationsnetzwerks zum Versenden von elektronischen Nachrichten, wobei N ein Netzwerk wie beispielsweise das Internet darstellt. An diesem Netzwerk N sind üblicherweise eine Vielzahl von Telekommunikationsendgeräten E1 bis E3 in Form von beispielsweise Personal Computern (PC) angeschlossen, die als Sender bzw. Empfänger von elektronischen Nachrichten üblicherweise einen sogenannten E-Mail-Client aufweisen. SMTP-E-Mail-Clients (Simple Mail Transport Protocol) sind beispielsweise als Lotus Notes^{™}, Microsoft Outlook^{™} usw. bekannt und werden als sogenannten Applikationsprogramme in den Telekommunikationsendgeräten E1 bis E3 lokal abgespeichert.

Ferner besitzt ein Benutzer bzw. ein jeweiliges Telekommunikationsendgerät E1 bis E3 in der Regel eine sogenannte E-Mail-Box bzw. ein Nachrichtenfach auf einem zentralen Server S. Dort werden sämtliche eingehende und ausgehende elektronischen Nachrichten bzw. E-Mails zwischengespeichert und an entsprechende weitere (nicht dargestellte) Nachrichtenserver (Mail-Server) im Netzwerk N weitergeleitet. Beim Empfangen von elektronischen Nachrichten bzw. E-Mails von diesem Mail-Server S werden üblicherweise alle zwischengespeicherten elektronischen Nachrichten auch auf den lokalen Telekommunikationsendgeräten E1 bis E3 bzw. ihren zugehörigen lokalen E-Mail-Clients abgelegt. Die Größe der zentralen Mailbox bzw. des zentralen Nachrichtenfachs, welches der Benutzer zur Verfügung hat, ist normalerweise limitiert. Empfängt ein Benutzer nun umfangreiche Datei-Anlagen bzw. "Attachments" zu einer jeweiligen E-Mail bzw. elektronischen Nachricht, so werden diese sowohl in der zentralen Mailbox als auch im lokalen E-Mail-Client des Telekommunikationsendgeräts E1 bis E3 abgelegt.

Um auf jeweilige Daten anderweitig zugreifen zu können, speichert ein jeweiliger Benutzer die Datei-Anlagen bzw. "Attachments" einer jeweiligen elektronischen Nachricht bzw. E-Mail nochmals in seinem Benutzer-Dateisystem, auf welches er üblicherweise persönliche Zugriffsrechte besitzt. Die Folge ist jedoch, dass die Datei-Anlage nun doppelt oder dreifach gespeichert ist, wobei sie sich sowohl in der zentralen Mailbox, in der lokalen Mailbox bzw. dem E-Mail-Client als auch im Benutzer-Dateisystem befindet. Dadurch ergeben sich erhöhte Kosten auf Grund des erhöhten Speicherbedarfs. Wenn der Benutzer andererseits die Datei-Anlagen aus der elektronischen Nachricht entfernt, gehen jedoch notwendige Informationen verloren, wie z.B. wohin die Anlagen gespeichert wurden oder auch der Zusammenhang zwischen dem erläuternden Text der elektronischen Nachricht und der Datei-Anlage.

In dem Online-Dokument "Attachment Executive Version 3.0" von "MAD Solutions" datiert vom Juli 2001, abgerufen am 15.9.2004 unter der URL http://web.archive.org/web/20030301033209/madsolutions.com/do cumentation.htm, XP002296525, wird ein Programm zur Verwaltung von E-Mail-Anlagen beschrieben, bei dem Datei-Anlagen einer eintreffenden E-Mail in ein Benutzer-Dateisystem übertragen werden und in der E-Mail durch einen Link auf ihren neuen Speicherort ersetzt werden.

Weiterhin ist aus dem Dokument US 2003/115273 A1 bekannt, eine Datei-Anlage einer E-Mail durch einen Link auf eine identische Datei-Anlage einer anderen E-Mail zu ersetzen.

Durch die in den vorgenannten Dokumenten beschriebenen Verfahren wird es jedoch erschwert, ausgehend von einer jeweiligen Datei-Anlage die zugehörigen E-Mails wiederzufinden.

Der Erfindung liegt daher die Aufgabe zu Grunde eine Vorrichtung und ein Verfahren zum benutzerseitigen Bearbeiten von elektronischen Nachrichten mit Datei-Anlagen zu schaffen, die einen verringerten Speicherplatzbedarf ermöglichen und einen engeren Zusammenhang zwischen den elektronischen Nachrichten und deren Datei-Anlagen bereitstellen.

Erfindungsgemäß wird diese Aufgebe hinsichtlich des Verfahrens durch die Maßnahmen des Patentanspruchs 1 und hinsichtlich der Vorrichtung durch die Merkmale des Patentanspruchs 6 gelöst.

Vorzugsweise werden die Datei-Anlagen der elektronischen Nachricht durch eine Speicherort-Verknüpfung auf einen von einem Benutzer ausgewählten Speicherort in einem Benutzer-Dateisystem ersetzt und an einem vom Benutzer ausgewählten Speicherort des Benutzer-Dateisystems abgespeichert, so dass die Datei-Anlage lediglich ein einziges Mal in voller Größe abgespeichert werden muss und somit Speicherplatz gespart werden kann.

Ferner wird an dem vom Benutzer ausgewählten Speicherort des Benutzer-Dateisystems eine Nachrichten-Verknüpfung als Hinweis auf die modifizierte elektronische Nachricht erstellt bzw. abgespeichert, wodurch man darüber hinaus eine Rück-Verbindung zur Ausgangs-E-Mail bzw. elektronischen Nachricht für jeweilige gespeicherte Datei-Anlagen erhält. Die Handhabung der im Benutzer-Dateisystem abgelegten Datei-Anlagen wird dadurch wesentlich verbessert.

Obwohl vorzugsweise beim Abspeichern der Datei-Anlagen der gleiche Dateiname verwendet wird, kann alternativ auch eine Änderung bzw. Modifikation des Dateinamens beim Abspeichern durchgeführt werden. In gleicher Weise können auch die Rück-Verknüpfungen bzw. Nachrichten-Verknüpfungen automatisch geänderte Dateinamen der Datei-Anlagen aufweisen. Auf diese Weise erhält ein Benutzer eine maximale Flexibilität beim Ablegen von Datei-Anlagen.

Darüber hinaus kann das Abspeichern der Datei-Anlagen nach vom Benutzer definierten Regeln oder in einer vom Benutzer festgelegten Dateistruktur erfolgen, wodurch man eine weitere Vereinfachung und Anpassung an die persönlichen Bedürfnisse eines Benutzers erhält.

Hinsichtlich der Vorrichtung zum benutzerseitigen Bearbeiten von elektronischen Nachrichten wird vorzugsweise ein E-Mail-Client zum Senden/Empfangen von elektronischen Nachrichten mit Datei-Anlagen, eine Anlage-Substitutionseinheit zum Ersetzen der Datei-Anlagen durch eine Speicherort-Verknüpfung, ein Benutzer-Dateisystem zum Speichern der Datei-Anlagen, eine Anlagen-Einfügeeinheit zum Einfügen der ersetzten Datei-Anlagen an einem ausgewählten Speicherort des Benutzer-Dateisystems, eine Steuereinheit zum Steuern der jeweiligen Komponenten und eine Verknüpfungs-Einfügeeinheit zum Einfügen einer Nachrichten-Verknüpfung am ausgewählten Speicherort des Benutzer-Dateisystems auf eine elektronische Nachricht mit ersetzter Datei-Anlage verwendet. Auf diese Weise kann durch relativ geringfügige Modifikationen in einem Telekommunikationsendgerät wie beispielsweise einem PC eine entsprechend benutzerfreundliche und speicheroptimierte Ablage von Datei-Anlagen erfolgen.

In den weiteren Unteransprüchen sind weitere vorteilhafte Ausgestaltungen der Erfindung gekennzeichnet.

Die Erfindung wird nachfolgend anhand eines Ausführungsbeispiels unter Bezugnahme auf die Zeichnung näher beschrieben.

Es zeigen:
Figur 1 eine vereinfachte Blockdarstellung eines herkömmlichen Telekommunikationsnetzwerks;
Figuren 2A bis 2D vereinfachte Bildschirmansichten einer elektronischen Nachricht zur Veranschaulichung des erfindungsgemäßen Verfahrens;
Figur 3 eine vereinfachte Bildschirmansicht eines Benutzer-Dateisystems zur Veranschaulichung des erfindungsgemäßen Verfahrens;
Figur 4 eine vereinfachte Blockdarstellung einer erfindungsgemäßen Vorrichtung zum benutzerseitigen Bearbeiten von elektronischen Nachrichten; und
Figur 5 ein Flussdiagramm zur Veranschaulichung wesentlicher Verfahrensschritte bei der Durchführung des erfindungsgemäßen Verfahrens zum benutzerseitigen Bearbeiten von elektronischen Nachrichten.

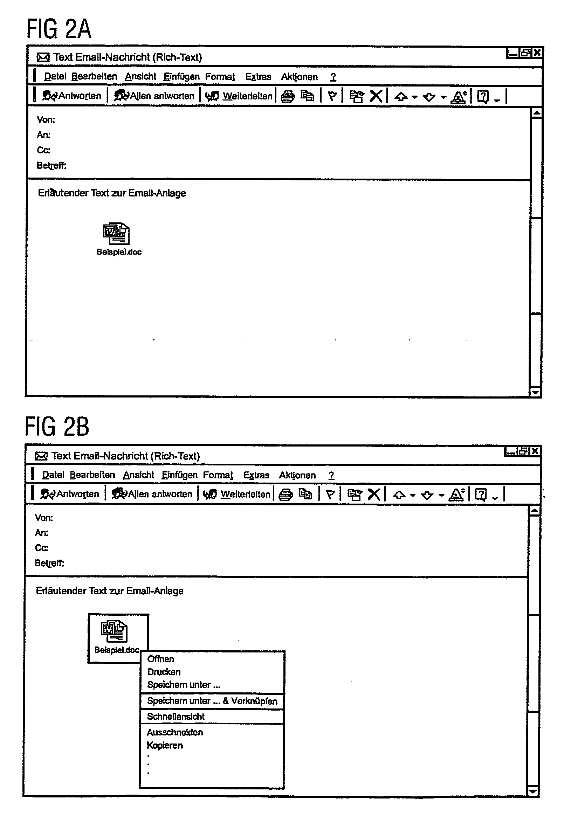

Figuren 2A bis 2D zeigen vereinfachte Bildschirmansichten eines E-Mail-Clients zur Veranschaulichung wesentlicher Verfahrensschritte des erfindungsgemäßen Verfahrens zum benutzerseitigen Bearbeiten von elektronischen Nachrichten.

Gemäß Figuren 2A bis 2D wird als SMTP-E-Mail-Client bzw. als Programm für das Abarbeiten der elektronischen Nachrichten, wie es beispielsweise in Telekommunikationsendgeräten installiert ist, beispielsweise das Programm Outlook^{™} von Microsoft verwendet.

In gleicher Weise können selbstverständlich auch andere E-Mail-Programme bzw. E-Mail-Clients verwendet werden.

Gemäß Figur 2A erhält ein Benutzer beispielsweise eine "TestEmail" mit einem erläuternden Text zu einer E-Mail-Anlage sowie eine Datei-Anlage bzw. "Attachment" mit dem Namen "Beispiel.doc". Sowohl der erläuternde Text als auch die Datei-Anlage werden vom E-Mail-Programm bzw. E-Mail-Client in einer gesonderten Sicherungsdatei (z.B. *.pst-Datei) gespeichert. Andererseits besteht jedoch üblicherweise ein Bedürfnis, insbesondere die Datei-Anlagen auch außerhalb des E-Mail-Clients bzw. Anwendungsprogramms zu benutzen und in einem gesonderten Benutzer-Dateisystem abzulegen bzw. zu verwalten.

Bei diesem Abspeichervorgang greift nunmehr die Erfindung ein, wobei gemäß Figur 2B beispielsweise durch Drücken bzw. Klicken auf die rechte Maustaste die Datei-Anlage "Beispiel.doc" markiert werden kann und sich ein Fenster mit den aus Microsoft-Windows™ bekannten Möglichkeiten ergibt. Zusätzlich zu den üblichen im Windows-Betriebssystem bekannten Möglichkeiten wie z.B. "Öffnen", "Drucken", "Speichern unter ...", "Schnellansicht", "Ausschneiden", "Kopieren", usw. besitzt dieses Fenster nunmehr darüber hinaus einen weiteren Befehl auf "Speichern unter ... & Verknüpfen" mit dem die markierte Datei, d.h. die Datei-Anlage "Beispiel.doc" durch eine Speicherort-Verknüpfung auf einen von einem Benutzer ausgewählten Speicherort in einem Benutzer-Dateisystem ersetzt und dadurch die elektronische Nachricht modifiziert wird. Genauer gesagt erfolgt ein Ausschneiden der Datei-Anlage gefolgt von einem Zwischenspeichern der Datei-Anlage in einem Zwischenspeicher-Puffer und ein abschließendes Einfügen der Speicherort-Verknüpfung in der E-Mail.

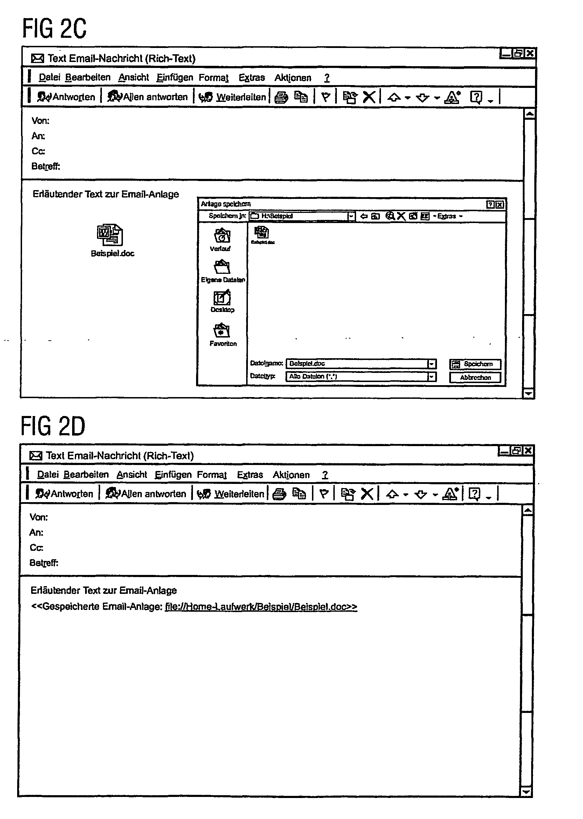

Figur 2C zeigt als nächsten Schritt nach dem Anklicken des Befehls "Speichern unter ... & Verknüpfen" eine ebenfalls aus Windows^{™} übliche Bildschirmansicht, wobei nunmehr der Ort bzw. das Benutzer-Dateisystem ausgewählt werden kann, unter dem die Datei-Anlage gespeichert werden soll. Hierbei hat ein Benutzer darüber hinaus die Möglichkeit, eine Änderung des Dateinamens der Datei-Anlage durchzuführen und eine bestimmte Dateistruktur zu erstellen oder vorbestimmte Regeln zum Abspeichern der Datei-Anlage festzulegen.

Durch Klicken auf das Feld "Speichern" in Figur 2C wird nunmehr die Datei-Anlage "Beispiel.doc" gemäß Figur 2D durch eine Speicherort-Verknüpfung "file://Home-Laufwerk/Beispiel/Beispiel.doc" ersetzt. Beim Schließen der elektronischen Nachricht werden die durchgeführten Änderungen entsprechend im E-Mail-Client bzw. Anwendungsprogramm gespeichert und die elektronische Nachricht dadurch modifiziert.

Da die in der elektronischen Nachricht angeführte Speicherort-Verknüpfung einen wesentlich geringeren Speicherplatzbedarf aufweist (ca. 1kByte) als die tatsächliche Datei-Anlage, ergibt sich dadurch eine Optimierung des zur Verfügung stehenden Speicherplatzbedarfs. Gleichwohl gehen keinerlei Informationen verloren, da die elektronische Nachricht weiter hin eine Verknüpfung zur eigentlichen Datei-Anlage aufweist und somit beispielsweise durch Doppelklick auf die Speicherort-Verknüpfung "file://Home-Laufwerk/Beispiel/Beispiel.doc" jederzeit die gewünschte Datei-Anlage geöffnet werden kann.

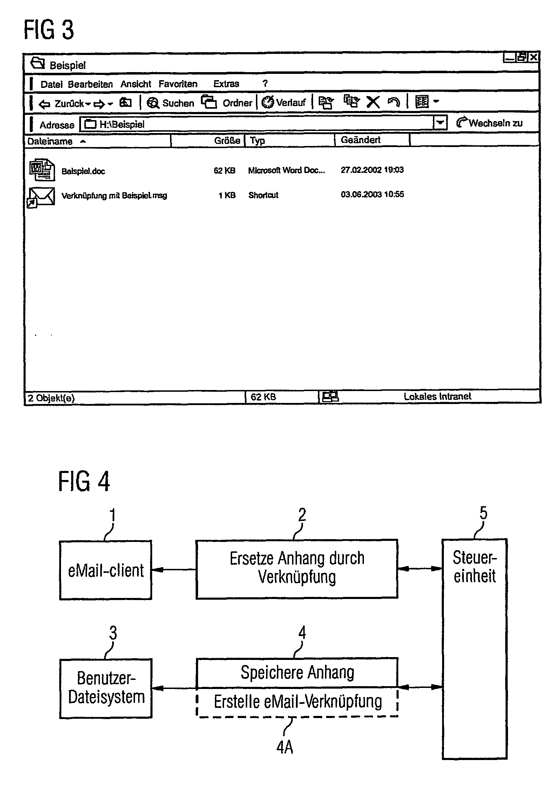

Die Figur 3 zeigt eine vereinfachte Bildschirmansicht eines Benutzer-Dateisystems zur Veranschaulichung der Abspeicher-Vorgänge einer entsprechend ersetzten Datei-Anlage, wobei gleiche Bezugszeichen wiederum gleiche oder entsprechende Elemente bezeichnen und auf eine wiederholte Beschreibung verzichtet wird.

Gemäß Figur 3 wird beispielsweise mit einem Dateimanagement-Anwendungsprogramm wie z.B. Microsoft Explorer^{™} der Speicherort des Benutzer-Dateisystems geöffnet, an dem die Datei-Anlage "Beispiel.doc" durch den vorstehenden Befehl "Speichern unter ... & Verknüpfen" abgelegt wurde.

Der Benutzer hat somit die gewohnten Möglichkeiten zur Verwaltung der mittels der elektronischen Nachricht übermittelten Datei-Anlage "Beispiel.doc".

Darüber wird bei dem erfindungsgemäßen Verfahren nicht nur eine Datei-Anlage durch eine Speicherort-Verknüpfung wie z.B. "file://Home-Laufwerk/Beispiel/Beispiel.doc" in der elektronischen Nachricht ersetzt, sondern darüber hinaus wird beim Abspeichern der Datei-Anlage eine Nachrichten-Verknüpfung als sogenannte Rück-Verknüpfung am vom Benutzer ausgewählten Speicherort des Benutzer-Dateisystems auf die modifizierte elektronische Nachricht erstellt.

Genauer gesagt wird gemäß Figur 3 eine zusätzliche Datei "Verknüpfung mit Beispiel.msg" im gleichen Ordner wie die Datei-Anlage "Beispiel.doc" erzeugt, wobei diese eine Rück-Verknüpfung zu dem E-Mail-Client bzw. Nachrichten-Anwendungsprogramm darstellt und beispielsweise durch Doppel klick auf diese Rück-Verknüpfung die entsprechend zugehörige elektronische Nachricht z.B. "TestEmail" automatisch öffnet. Auf diese Weise besteht nicht nur eine Verknüpfung von der elektronischen Nachricht zum Benutzer-Dateisystem sondern auch vom Benutzer-Dateisystem zurück zur elektronischen Nachricht.

Vorzugsweise weist diese Rück-Verknüpfung bzw. Nachrichten-Verknüpfung den gleichen Namen auf wie die Datei-Anlage, wodurch ein Wiederauffinden der Ausgangs-E-Mail wesentlich vereinfacht wird. Sollte beim Abspeichern der zumindest einen Datei-Anlage gemäß Figur 2C eine Änderung des Dateinamens durchgeführt worden sein, so wird beim Erstellen der Nachrichten-Verknüpfung vorzugsweise auch der geänderte Dateiname der Datei-Anlage berücksichtigt und entsprechend verwendet.

Der Abspeichervorgang der Datei-Anlagen kann, wie bereits angedeutet, darüber hinaus nach vom Benutzer definierten Regeln und/oder in einer von einem Benutzer definierten Dateistruktur im Benutzer-Dateisystem abgelegt werden, wodurch sich neben der Speicherplatzoptimierung ein besonders benutzerfreundliches Datei-Anlagen-Ablagesystem ergibt.

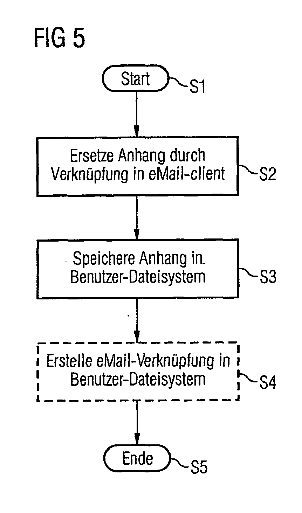

Figur 5 zeigt ein Flussdiagramm zur Veranschaulichung wesentlicher Verfahrensschritte des erfindungsgemäßen Verfahrens zum benutzerseitigen Bearbeiten von elektronischen Nachrichten mit Datei-Anlagen, wobei in einem Schritt S1 beispielsweise ein E-Mail-Client bzw. Nachrichten-Anwendungsprogramm gestartet wird. Weist eine elektronische Nachricht eine Datei-Anlage auf, so wird in einem Schritt S2 der Datei-Anhang (Attachment) durch eine Speicherort-Verknüpfung auf einen ausgewählten Speicherort im Benutzer-Dateisystem ersetzt und die elektronische Nachricht entsprechend modifiziert. In einem Schritt S3 wird der Datei-Anhang am ausgewählten Speicherort des Benutzer-Dateisystems abgespeichert, wobei in einem Schritt S4 darüber hinaus eine Rück-Verknüpfung bzw. Nachrichten-Verknüpfung am ausgewählten Speicherort des Benutzer-Dateisystems auf die modifizierte elektronische Nachricht erstellt wird. In einem Schritt S5 wird das erfindungsgemäße Verfahren abgeschlossen.

Zur Realisierung des vorstehend beschriebenen Verfahrens wird nachfolgend eine entsprechende Vorrichtung beschrieben, die besonders einfach in einem jeweiligen Telekommunikationsendgerät realisiert werden kann.

Figur 4 zeigt eine vereinfachte Blockdarstellung einer erfindungsgemäßen Vorrichtung zum benutzerseitigen Bearbeiten von elektronischen Nachrichten, wobei mit dem Bezugszeichen 1 ein E-Mail-Client bzw. Nachrichten-Anwendungsprogramm bezeichnet wird, welches beispielsweise das vorstehend beschriebene Programm Microsoft Outlook^{™} oder Lotus Notes^{™} ist. Eine Anlage-Substitutionseinheit 2 dient hierbei dem Ersetzen der Datei-Anlage einer elektronischen Nachricht des E-Mail-Clients 1 durch eine entsprechende vorstehend beschriebene Speicherort-Verknüpfung. Eine Anlagen-Einfügeeinheit 4 dient ferner zum Einfügen der ersetzten Datei-Anlage an einem ausgewählten Speicherort eines Benutzer-Dateisystems 3, welches vorzugsweise auf der lokalen Festplatte bzw. unmittelbar im Telekommunikationsendgerät ausgebildet ist. Grundsätzlich können sich jedoch auch Benutzer-Dateisysteme in einem internen oder externen Netzwerk befinden, sofern deren Zugangsberechtigung nur von einem jeweiligen Benutzer ermöglicht ist.

Gemäß Figur 4 weist die Anlagen-Einfügeeinheit 4 ferner eine Verknüpfungs-Einfügeeinheit 4A zum Einfügen einer Nachrichten-Verknüpfung bzw. Rück-Verknüpfung am ausgewählten Speicherort des Benutzer-Dateisystems 3 auf, die auf eine elektronische Nachricht mit ersetzter Datei-Anlage zurückverweist. Der E-Mail-Client 1, die Anlagen-Substitutionseinheit 2 und die Anlagen-Einfügeeinheit 4 werden zu ihrer Koordination von einer Steuereinheit 5 gesteuert.

Zur konkreten Realisierung des vorstehend beschriebenen Verfahrens sowie der zugehörigen Vorrichtung ist vorzugsweise ein sogenanntes Betriebssystem bzw. operating system (OS) eines jeweiligen Telekommunikationsendgeräts bzw. PCs geeignet, wobei insbesondere bei Verwendung einer Microsoft-Windows™-Umgebung eine Realisierung mit besonders einfachen Mitteln durchgeführt werden kann.

Auf diese Weise ergeben sich durch Vermeidung mehrfacher Speicherung von Datei-Anlagen wesentliche Kostenvorteile ohne dabei die Handhabbarkeit negativ zu beeinflussen. Insbesondere durch die Rück-Verknüpfungen können abgelegte Datei-Anlagen besonders einfach wieder aufgefunden werden.

Die Erfindung wurde vorstehend anhand des SMTP-E-Mail-Clients "Microsoft Outlook^{™}" beschrieben. Sie ist jedoch nicht darauf beschränkt und umfasst in gleicher Weise alternative E-Mail-Clients bzw. Nachrichten-Anwendungsprogramme zum Senden/Empfangen von elektronischen Nachrichten mit speicherplatzintensiven Datei-Anlagen.

## Patentansprüche

1. Verfahren zum benutzerseitigen Bearbeiten von elektronischen Nachrichten mit Datei-Anlagen mit den Schritten:
a) Ersetzen (S2) von zumindest einer Datei-Anlage der elektronischen Nachricht durch eine Speicherort-Verknüpfung auf einen von einem Benutzer ausgewählten Speicherort in einem Benutzer-Dateisystem zum Modifizieren der elektronischen Nachricht und
b) Abspeichern (S3) der zumindest einen Datei-Anlage der elektronischen Nachricht am vom Benutzer ausgewählten Speicherort des Benutzer-Dateisystems,
**dadurch gekennzeichnet, dass**
c) eine Nachrichten-Verknüpfung, die durch anklicken die modifizierte elektrische Nachricht öffnet, am vom Benutzer ausgewählten Speicherort des Benutzer-Dateisystems erstellt wird (S4).

2. Verfahren nach Patentanspruch 1,
**dadurch gekennzeichnet, dass** beim Abspeichern der zumindest einen Datei-Anlage eine Änderung des Dateinamens der Datei-Anlage durchgeführt wird.

3. Verfahren nach Patentanspruch 2,
**dadurch gekennzeichnet, dass** beim Erstellen der Nachrichten-Verknüpfung der geänderte Dateiname der Datei-Anlage berücksichtigt wird.

4. Verfahren nach einem der Patentansprüche 1 bis 3,
**dadurch gekennzeichnet, dass** die elektronische Nachricht eine E-Mail eines SMTP-E-Mail-Client darstellt.

5. Verfahren nach einem der Patentansprüche 1 bis 4,
**dadurch gekennzeichnet, dass** das Abspeichern der Datei-Anlage nach definierten Regeln und/oder in einer festgelegten Dateistruktur durchgeführt wird.

6. Vorrichtung zum benutzerseitigen Bearbeiten von elektronischen Nachrichten mit
einem E-Mail-Client (1) zum Empfangen von elektronischen Nachrichten mit Datei-Anlagen,
einer Anlage-Substitutionseinheit (2) zum Ersetzen einer Datei-Anlage einer empfangenen elektronischen Nachricht durch eine Speicherort-Verknüpfung,
einem Benutzer-Dateisystem (3) zum Speichern von Datei-Anlagen,
einer Anlagen-Einfügeeinheit (4) zum Einfügen der ersetzten Datei-Anlage an einem ausgewählten Speicherort des Benutzer-Dateisystems (3), und
einer Steuereinheit (5) zum Steuern des E-Mail-Client (1), der Anlagen-Substitutionseinheit (2) und der Anlagen-Einfügeeinheit (4),
**gekennzeichnet durch**
eine Verknüpfungs-Einfügeeinheit (4A) zum Einfügen einer Nachrichten-Verknüpfung am ausgewählten Speicherort des Benutzer-Dateisystems (3), die auf eine elektronische Nachricht mit ersetzter Datei-Anlage verweist, und die elektronische Nachricht **durch** anklicken öffnet.

7. Vorrichtung nach Patentanspruch 6,
**dadurch gekennzeichnet, dass** die eingefügte Nachrichten-Verknüpfung einen gleichen Dateinamen aufweist wie die eingefügte Datei-Anlage.

8. Vorrichtung nach Patentanspruch 6 oder 7,
**dadurch gekennzeichnet, dass** die Anlagen-Einfügeeinheit (4) die ersetzte Datei-Anlage unter geändertem Dateinamen im Benutzer-Dateisystem (3) ablegt.

9. Vorrichtung nach einem der Patentansprüche 6 bis 8,
**dadurch gekennzeichnet, dass** die Anlagen-Einfügeeinheit (4) die ersetzte Datei-Anlage nach von einem Benutzer definierten Regeln und/oder in einer von einem Benutzer definierten Dateistruktur im Benutzer-Dateisystem (3) ablegt.

## Claims

1. Method for the user-based processing of electronic messages with file attachments, said method having the following steps:
(a) replacement (S2) of at least one file attachment of the electronic message by a memory location link to a user-selected memory location in a user file system to modify the electronic message; and
(b) saving (S3) of the at least one file attachment of the electronic message at the user-selected memory location in the user file system,
**characterised in that**
c) a message link, which opens by clicking on the modified electronic message, is created (S4) at the user-selected memory location in the user file system.

2. Method according to claim 1,
**characterised in that** when the at least one file attachment is saved, the file name of the file attachment is amended.

3. Method according to claim 2,
**characterised in that** when the message link is created, the amended file name of the file attachment is taken into account.

4. Method according to one of claims 1 to 3,
**characterised in that** the electronic message is an e-mail of an SMTP e-mail client.

5. Method according to one of claims 1 to 4,
**characterised in that** the file attachment is saved according to defined rules and/or in a set file structure.

6. Device for the user-based processing of electronic messages with
an e-mail client (1) for receiving electronic messages with file attachments,
an attachment substitution unit (2) for replacing a file attachment of a received electronic message by a memory location link,
a user file system (3) for storing file attachments,
an attachments insertion unit (4) for inserting the replaced file attachment at a selected memory location in the user file system (3), and
a control unit (5) for controlling the e-mail client (1), the attachments substitution unit (2) and the attachments insertion unit (4),
**characterised by**
a link insertion unit (4A) for inserting a message link at a selected memory location in the user file system (3), which link refers to an electronic message with a replaced file attachment and which opens the electronic message by clicking thereon.

7. Device according to claim 6,
**characterised in that** the inserted message link has a file name identical to that of the inserted file attachment.

8. Device according to one of claims 6 to 7,
**characterised in that** the attachments insertion unit (4) files the replaced file attachment in the user file system (3) under an amended file name.

9. Device according to one of claims 6 to 8,
**characterised in that** the attachments insertion unit (4) files the replaced file attachment in the user file system (3) according to user-defined rules and/or in a user-defined file structure.

## Revendications

1. Procédé pour le traitement côté utilisateur de messages électroniques contenant des fichiers attachés, comprenant les étapes :
a) substitution (S2) d'au moins un fichier attaché du message électronique par une liaison d'emplacement de mémoire à un emplacement de mémoire sélectionné par un utilisateur dans un système de fichiers utilisateur pour modifier le message électronique et
b) mémorisation (S3) de l'au moins un fichier attaché du message électronique à l'emplacement de mémoire, sélectionné par l'utilisateur, du système de fichiers utilisateur,
**caractérisé en ce qu'**
c) une liaison de message, qui ouvre le message électronique modifié en cliquant dessus, est établie (S4) à l'emplacement de mémoire sélectionné par l'utilisateur du système de fichiers utilisateur.

2. Procédé selon la revendication 1,
**caractérisé en ce que** lors de la mémorisation de l'au moins un fichier attaché, une modification du nom de fichier du fichier attaché est réalisée.

3. Procédé selon la revendication 2,
**caractérisé en ce que** lorsque la liaison de message est établie, le nom de fichier modifié du fichier attaché est pris en compte.

4. Procédé selon l'une quelconque des revendications 1 à 3,
**caractérisé en ce que** le message électronique représente un courrier électronique d'un SMTP-E-Mail-Client.

5. Procédé selon l'une quelconque des revendications 1 à 4,
**caractérisé en ce que** la mémorisation du fichier attaché est réalisée selon des règles définies et/ou dans une structure de fichier déterminée.

6. Dispositif pour le traitement côté utilisateur de messages électroniques, comprenant
un E-Mail-Client (1) destiné à recevoir des messages électroniques contenant des fichiers attachés,
une unité de substitution de documents attachés (2) destinée à substituer un fichier attaché d'un message électronique reçu par une liaison d'emplacement de mémoire,
un système de fichiers utilisateur (3) destiné à mémoriser des fichiers attachés,
une unité d'insertion de documents attachés (4) destinée à insérer le fichier attaché substitué à un emplacement de mémoire sélectionné du système de fichiers utilisateur (3), et
une unité de commande (5) destinée à commander l'E-Mail-Client (1), l'unité de substitution de documents attachés (2) et l'unité d'insertion de documents attachés (4),
**caractérisé par**
une unité d'insertion de liaison (4A), destinée à insérer une liaison de message à l'emplacement de mémoire sélectionné du système de fichiers utilisateur (3), qui renvoie à un message électronique contenant un fichier attaché substitué, et qui ouvre le message électronique en cliquant dessus.

7. Dispositif selon la revendication 6,
**caractérisé en ce que** la liaison de message insérée présente un même nom de fichier que le fichier attaché inséré.

8. Dispositif selon la revendication 6 ou 7,
**caractérisé en ce que** l'unité d'insertion de documents attachés (4) enregistre dans le système de fichiers utilisateur (3) le fichier attaché substitué, sous le nom de fichier modifié.

9. Dispositif selon l'une quelconque des revendications 6 à 8,
**caractérisé en ce que** l'unité d'insertion de documents attachés (4) enregistre dans le système de fichiers utilisateur (3) le fichier attaché substitué selon des règles définies par un utilisateur et/ou dans une structure de fichier définie par un utilisateur.
